Europäisches Patentamt

European Patent Office

Office européen des brevets

(11) Publication number: **0 075 190**

**B1**

(12) **EUROPEAN PATENT SPECIFICATION**

(45) Date of publication of patent specification: **01.03.89**

(51) Int. Cl.⁴: **G 01 B 15/02**

(21) Application number: **82108258.3**

(22) Date of filing: **08.09.82**

(54) Apparatus for measuring thickness.

(30) Priority: **18.09.81 US 303574**

(43) Date of publication of application:
**30.03.83 Bulletin 83/13**

(45) Publication of the grant of the patent:
**01.03.89 Bulletin 89/09**

(84) Designated Contracting States:
**AT BE CH DE FR GB IT LI LU NL SE**

(56) References cited:
**DE-A-2 754 309**
**GB-A-2 114 732**
**US-A-3 486 113**
**US-A-3 683 187**
**US-A-3 955 086**
**US-A-4 119 846**

(73) Proprietor: **DATA MEASUREMENT CORPORATION**
**P.O. Box 485 8605 Grovemont Circle**
**Gaithersburg Maryland 20877 (US)**

(72) Inventor: **Gignoux, Dominique**
**5405 Albermarle Street**
**Bethesda Maryland (US)**
Inventor: **Murray, Russell**
**10601 Graelock Road**
**Laurel Maryland (US)**

(74) Representative: **JENSEN & SON**
**8 Fulwood Place High Holborn**
**London WC1V 6HG (GB)**

Courier Press, Leamington Spa, England.

## Description

The present invention relates to an apparatus of the type which measures the transmission of radiation through a material of generally flat or slightly curved form. In apparatus of this type, a beam of radiation is produced, for instance by an X-ray source or a radio isotope material. The ratio of the initial beam intensity (Io) to the intensity of the beam (I) which remains after its partial absorption by the material is directly related to the number of atoms of the material which are within the beam. From this number, the thickness of the material can be deduced and for this reason, the apparatus is generally referred to as a thickness gauge. This type of equipment is abundantly described in the literature and in particular in Section 18, "X-ray and Isotope Gauging" of the Non-Destructive Testing Handbook, (Ronald Press Co., New York).

Thickness standards are used to calibrate the gauge; these are generally made of a reference material of a known composition. The gauges of the prior art, for example, United States Patent No. 4119846, are designed to effect measurement about a particular thickness value, which is set at a nominal or target value and obtain the measurement of an unknown sample as a deviation from such nominal value. For each nominal reading several parameters of source particle energy or controls within the detector may be variable. A correction of the measurement is required when measuring material of a composition which is different from that of the standards used. This correction will change whenever a source or detector parameter is altered, thus requiring the establishment of a complete function or calibration curve for composition correction.

United States Patent No. 3683187 relates to the measurement of tubular bodies, as compared with substantially flat or only slightly curved materials and this specification is also concerned with the comparison of a reference standard with the sample and determining thickness as a deviation from the standard.

Furthermore, in the prior art gauges, each standard is considered to be 100% accurate, whereas in practice, particularly thin standards may contain random inaccuracies.

The present invention seeks to provide a thickness gauge which measures the thickness of a material in absolute values, rather than as differential thicknesses or deviations from a nominal value. A function is used which is directly related to thickness and the response of the detector; it additionally seeks to provided means by which the thickness function is updated.

According to the invention there is provided a thickness gauge for measuring the thickness of a material, comprising a radiation source, a detector spaced from said source and arranged to receive a beam of radiation emitted by the source, the detector including means to convert the intensity of the radiation received by the detector into an electrical output signal, a shutter means of a radiation absorbing material which is movable on command into the beam of radiation between the source and the detector, the gauge defining a first path between the source and the detector into which the material to be measured can be passed and a second path, parallel to said first path, into which standards of known nominal thickness or said shutter can be inserted, characterised in that the intensity of the radiation source, for at least one of a range of material thicknesses, is substantially constant, during calibration of the gauge and during measurement of the material inserted in the beam of radiation, the material thickness being measured as an absolute value determined from a function which relates absolute material thickness to detector output values and the gauge includes means for recording respective values of detector output values corresponding to the standards of known nominal thickness and computer means for determining a thickness function that best fits the relationship between the recorded values of the standard thicknesses and the corresponding detector outputs and recording said function as the relationship between the thickness of the material being measured and the output of the detector, the computer means further comprising means for determining a value for the thickness of the material to be measured by applying the thickness function to the detector output when the material being measured is in the beam, means for storing as error values the difference between the known nominal thickness standards and the thickness obtained by applying the thickness function to the detector output obtained by inserting the known standard in the radiation beam, the computer means further having means for correction of the detector output by calculating a thickness ratio as a fraction, the numerator of which consists of a known nominal thickness standard minus the recorded error of said standard and the denominator of which is the thickness value obtained by the remeasurement of said standard while using a previously stored thickness function and updating the thickness function by multiplying the previously stored function by the thickness ratio.

The invention further seeks to provide a gauge in which the effect of the random inaccuracies of the nominal standards are effectively removed. The invention additionally seeks to provide a means by which composition corrections can be carried out more simply, by using one or at most a small number of correction factors.

The invention will now be described in more detail and with reference to the accompanying drawings, in which:

Figure 1 is a block diagram of a radiation thickness gauge in accordance with the invention,

Figure 2 is a graph showing the relationship of material thickness with reference to detector output, as determined by the standards in gauges of the prior art, and

Figure 3 is a graph showing the relationship of thickness to detector output points corresponding to the standards, a curve fitted through these points and two points used in the calibration of the gauge, in accordance with the present invention.

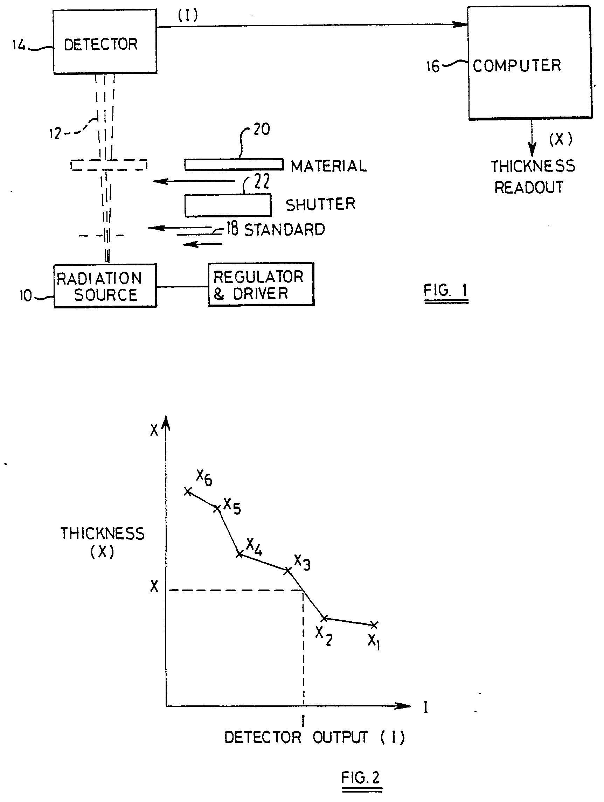

Figure 1 shows a preferred embodiment of the invention in which a radiation source 10, which may be a radio isotope or an X-ray source and having an operating voltage which is fixed either for a single operating range, or for each of a range of operating voltages. The source produces a beam of radiation 12 which is directed at a radiation detector 14 spaced from the source. The radiation detector may consist of a scintillation crystal and a photo-multiplier tube, or an ionisation chamber as described in "Radiation Detection and Measurement" by Glenn F. Knoll, (John Wiley & Sons). The detector may also contain amplifier means able to generate a suitable electrical signal or detector output. At least one transverse path extends through the beam 12 between the source 10 and the detector 14 whereby one or more thickness standards 18, a shutter 22 of lead or other radiation absorbing material and the material to be measured can be selectively inserted in the beam. Preferably, separate parallel paths for each are provided as shown.

The output of the detector (I) is related to the thickness of the material 20, interposed between the source 10 and the detector 14 and the resulting detector output is translated into a thickness measurement (X) by a computer 16.

United States Patent No. 4119846, among others, discloses a gauge in which the function representing the thickness of a sample with respect to the output of the detector is obtained by inserting a number of thickness standards 18 in the beam, either singly or in combinations representing various known nominal thicknesses (Xn) within the range of the gauge. A series of points can then be derived, as shown in Figure 2. In some of the prior art gauges, the function of X with respect to I is obtained by fitting a curve through two or three points and then effecting the translation of measured detector output I into determined thickness X by interpolation. This results, in effect, in using the standards to support the full function shown in Figure 2, where, for the sake of clarity, only a few combinations of standards are shown. One of the problems which is encountered is that the curve shown in Figure 2 is not smooth, because it is influenced by the inaccuracies of each of the standards. The present invention, however, is able to provide a thickness function X=f(I) which is independent of the random inaccuracies of the standard combinations, while also permitting the updating and calibrating of the thickness function as necessary and performing corrections for material composition.

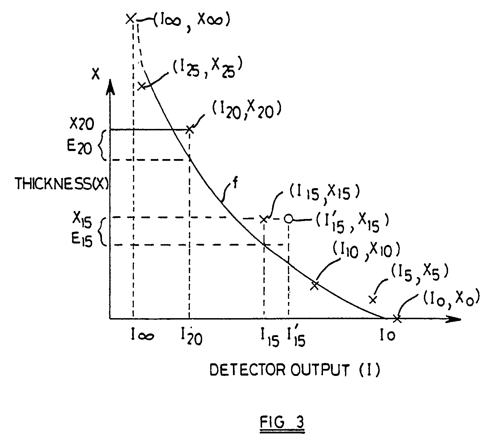

The performance of the invention is illustrated in Figure 3, which displays the data obtained using a number of standards, singly and in combination (X5 to X25), such number being preferably substantially not less than twenty, only selected points being shown for simplicity. The function (f) is obtained by using one of the several averaging or curve-fitting approximations available in digital computer programmes and resulting in a "best fit" function (f) being expressed as a polynomial, preferably utilizing a statistical method in which the point corresponding to zero thickness is measured several times. Such methods are described in various textbooks and in particular "Numerical Methods for Scientists and Engineers", by Hamming, McGraw Hill.

The "best fit" operation requires placing a number of standard combinations in the beam. For this reason, it requires more than 10 seconds and generally several tens of second, to accomplish.

An additional "standard" which may be used is that corresponding to zero thickness $(X_o)$; that is with no standard in the beam. Another "standard" is that corresponding to infinite thickness $(X_{oo})$ obtained by means of the lead shutter 22.

Sometimes the data point obtained with thickness zero is more accurate than the others for the reason that the value of $X_o$ is known with greater accuracy than that of the very thin samples. For this reason it may be desirable to give a greater weight for this point by including it several times in the "best fit" operation while all other points are counted only once.

The use of a program such as that mentioned above also makes it possible to store an error value $E_n$ corresponding to deviation of each thickness standard $X_n$ from the value determined by the function (f).

Thus in Figure 3, $E_{15}$ and $E_{20}$ indicate thickness errors of the standards $X_{15}$ and $X_{20}$ as determined by the function (f).

It may be that the total range of thicknesses to be covered results in radiation intensities outside the range in which the detector can operate. In this case, if the source of radiation is an x-ray source, its voltage need not stay fixed but may be set at one of several constant voltages, each for a certain range of thickness. In this case, there will be one thickness function as described above for each voltage and the corresponding thickness range. Total number of ranges required is generaly less than ten.

To correct for drifts that may occur, a gauge is capable of being operated using any or all of the calibration methods described below and illustrated in Figure 3.

(A) One correction method is based on the fact that the detector output (I) should be zero when the thickness (X) is very large. This is obtained by obstructing temporarily the beam with the lead shutter 22, for example, before commencing a series of measurements, then measuring the corresponding value of I, (i.e. Ioo) and thereafter subtracting the value from all measurements of detector output during the series of measurements.

(B) A second correction method consists of taking one selected standard, such as $X_{15}$, and repeating the measurement. Due to drift, the measured value of I will generally not be the same as the value ($I_{15}$) which was obtained at the time of determination of the thickness function (f) but a new value ($I'_{15}$). A detector output ratio $R = I_{15}/I'_{15}$ is then obtained and the thickness function $X = f(I)$ is replaced by the updated function $X = f(RI)$. For this correction it is necessary to take only one standard to determine R.

(C) An additional correction for drift, being the object of this invention, consists of replacing the thickness function $X = f(I)$ by the updated function:

$$X = (R_t)f(I) = \frac{Xn - En}{X'n} = \frac{X_n - E_n}{f(I'_n)} . f(I)$$

in which the multiplier applied to f(I) is called the thickness ratio ($R_t$) wherein $f(I'_n)$ gives the thickness as obtained by re-measuring the standard $X_n$ using a previously determined thickness function.

The action of storing in the computer 16 a function (or respective functions covering all ranges of the gauge) together with the errors ($E_n$) of the standards makes it possible to perform gauging measurements without being influenced by the random inaccuracies of the standards ($X_n$). It also makes possible simple calibrating and updating by correction methods B or C above using only one standard or one combination of standards. In the case of method B above, the standard used for this purpose may be the zero thickness standard.

An advantage of the gauge is that it gives the thickness gauge operator the ability to accomplish the calibration or updating by methods A, B and C above in order best suited to the circumstances. By way of illustration, it can be said that if the operator suspects a detector drift, method A is recommended. For a change in gauge geometry, for instance, in distance from source to detector, method B is suitable. For a drift in source voltage, method C is recommended.

The measurement procedure described above is only strictly valid for a gauge measuring the same material as that of which the standards are made. In general, this is not the case. When the gauge is used in the metal industry, for instance, the metal being measured may be a different alloy than that of the standard. In that case, an alloy factor (K) is used to correct the function as follows:

$$X = Kf(I)$$

One factor K per alloy per voltage range need be stored in the computer 16. The factor K may be determined experimentally or calculated using for instance the methods described in "Composition Effects in Thickness Gauging", C. J. Collins, Journal of the Institute of Metals, 1969, Volume 97. Similarly, when the metal measured is hot, the measurements obtained need to be multiplied by a temperature correction factor. In some cases this may be combined with the alloy or composition factor into a single correction factor to account for the fact that the metal comprised within the area of the beam expands with the area expansion co-efficient of the material being gauged. The application of these factors is clearly explained in "X-Ray and Isotope Gauging" mentioned above.

In the preferred embodiment of the invention, the operations described above are accomplished by a computer which is preferably a microcomputer consisting of a chip and auxilliary equipment.

## Claims

1. A thickness gauge for measuring the thickness of a material, comprising a radiation source (10), a detector (14) spaced from said source and arranged to receive a beam of radiation (12) emitted by the source (10), the detector (14) including means to convert the intensity of the radiation received by the detector into an electrical output signal (I), a shutter means (22) of a radiation absorbing material which is movable on command into the beam of radiation (12) between the source (10) and the detector (14), the gauge defining a first path between the source and the detector into which the material to be measured can be passed and a second path, parallel to said first path, into which standards (18) of known nominal thickness or said shutter (22) can be inserted, characterised in that the intensity of the radiation source, for at least one of a range of material thicknesses, is substantially constant, during calibration of the gauge and during measurement of the material inserted in the beam of radiation (12), the material thickness being measured as an absolute value determined from a function which relates absolute material thickness to detector output values and the gauge includes means for recording respective values of detector output values corresponding to the standards of known nominal thickness and computer means (16) for determining a thickness function that best fits the relationship between the recorded values of the standard thicknesses and the corresponding detector outputs and recording said function as the relationship between the thickness of the material being measured and the output of the detector (14), the computer means further comprising means for determining a value for the thickness of the material to be measured by applying the thickness function to the detector output when the material being measured is in the beam, means for storing as error values the difference between the known nominal thickness standards and the thickness obtained by applying the thickness function to the detector output obtained by inserting the known standard in the radiation beam, the computer means further having means for correction of the detector output by calculating a thickness ratio as a fraction, the numerator of which consists of a known nominal thickness standard minus the recorded error of said standard and the denominator of which is the thickness value obtained by the remeasurement of said standard while using a previously stored thickness function and updating the thickness function by multiplying the previously stored function by the thickness ratio.

2. A gauge according to claim 1, charactersed in that the combination of standards includes one corresponding to an empty space and which represents zero thickness.

3. A gauge according to claim 2, characterised in that the computer means is programmed to determine the thickness function by use of a best fit statistical method, in which the standard representing zero thickness is counted a plurality of times.

4. A gauge according to any one of claims 1 to 3, characterised in that the source of radiation is a radio isotope.

5. A gauge according to any one of claims 1 to 3, characterised in that the source of radiation is an X-ray source.

6. A gauge according to 5, characterised in that the X-ray source is operated at one of a number of fixed voltages, the computer being programmed to determine a respective thickness function for each of said voltages.

7. A gauge according to any one of claims 1 to 6, characterised in that means are provided which multiply the thickness value obtained from the current thickness function by a value which effects composition and temperature compensation.

8. A gauge according to any one of the preceding claims, characterised in that the computer means comprises a microcomputer.

**Patentansprüche**

1. Eine Dickenmeßvorrichtung zur Messung der Dicke eines Werkstoffes mit einer Strahlungsquelle (10), mit einem im Abstand von dieser Quelle angeordneten Detektor (14) zum Empfang eines von der Quelle (10) emittierten Strahlenbündels (12), wobei der Detektor (14) Mittel zur Umwandlung der von ihm empfangenen Strahlungsintensität in ein elektrisches Ausgangssignal (I) einschließt, mit einem Verschlußmittel (22) aus strahlenabsorebierenden Material, das durch Steuerung in das Strahlenbündel (12) zwischen der Quelle (10) und dem Detektor (14) bewegbar ist, wobei die Vorrichtung eine erste Bahn zwischen Quelle und Detektor umfaßt, in welche der zu messende Werkstoff eingebracht werden kann, sowie eine zur ersten parallele zweite Bahn, in welche Standards (18) bekannter nomineller Dicke oder das Verschlußmittel (22) eingeführt werden können, dadurch gekennzeichnet, daß die Intensität der Strahlungsquelle während der Eichung der Vorrichtung und während der Messung des in das Strahlenbündel (12) eingeführten Werkstoffes im wesentlichen konstant ist, wobei die Werkstoffdicke als absoluter Wert gemessen wird, und zwar bestimmt aus einer Funktion, die absolute Werkstoffdicken mit Detektorausgangswerten verknüpft, daß die Vorrichtung Mittel zur Aufzeichnung betreffender Werte der Detektorausgangswerte, die den Standards bekannter nomineller Dicke entsprechen, sowie Computermittel (16) einschließt zur Bestimmung einer Dickenfunktion, die am besten an die Beziehung zwischen den aufgezeichneten Werten der Standarddicken und den entsprechenden Detektorausgängen angepaßt ist, wobei diese Funktion als die Beziehung zwischen der Dicke des zu messenden Werkstoffes und dem Ausgang des Detektors (14) aufgezeichnet wird, daß die Computermittel weiterhin umfassen: Mittel zur Bestimmung eines Wertes für die Dicke des zu messenden Werkstoffes durch Anwendung der Dickenfunktion auf den Detektorausgang, wenn der Werkstoff beim Messen sich im Strahlenbündel befindet, und Mittel zum Speichern der Differenz zwischen den Standards bekannter nomineller dicke und der durch Anwendung der Dickenfunktion auf den Computerausgang erhaltenen Dicke als Fehlerwerte, wobei dieser Computerausgang durch Einführung des bekannten Standards in das Strahlenbündel erhalten wird, und daß die Computermittel ferner Mittel aufweisen zur Korrektur des Detektorausgangs durch Berechnung eines Dickenverhältnisses als Bruch, dessen Zähler aus einem Standard bekannter nomineller Dicke minus dem aufgezeichneten Fehler dieses Standards besteht, und dessen Nenner der durch erneute Messung des Standards eraltene Dickenwert ist, wobei eine zuvor gespeicherte Dickenfunktion benutzt und die Dickenfunktion durch Multiplikation der zuvor gespeicherten Funktion mit dem Dickenverhältnis ergänzt wird.

2. Eine Meßvorrichtung nach Anspruch 1, dadurch gekennzeichnet, daß die Kombination der Standards einen Standard einschließt, der einem leeren Raum entspricht und die Dicke 0 repräsentiert.

3. Eine Meßvorrichtung nach Anspruch 2, dadurch gekennzeichnet, daß die Computermittel so programmiert sind, daß sie die Dickenfunktion durch Anwendung einer statistischen Methode zur besten Anpassung benutzen, bei welcher der die Dicke 0 repräsentierende Standard mehrmals gezählt wird.

4. Eine Meßvorrichtung nach einem der Ansprüche 1 bis 3, dadurch gekennzeichnet, daß die Strahlungsquelle ein Radioisotop ist.

5. Eine Meßvorrichtung nach einem der Ansprüche 1 bis 3, dadurch gekennzeichnet, daß die Strahlungsquelle eine Röntgenstrahlenquelle ist.

6. Eine Meßvorrichtung nach Anspruch 5, dadurch gekennzeichnet, daß die Röntgenstrahlenquelle bei einer bestimmten Spannung aus einer Mehrzahl fester Spannungen betrieben wird, und daß der Computer so programmiert wird, daß er eine jeweilige Dickenfunktion für jede dieser Spannungen bestimmt.

7. Eine Meßvorrichtung nach einem der Ansprüche 1 bis 6, dadurch gekennzeichnet, daß Mittel vorgesehen sind, welche den Dickenwert, der aus der gegenwärtigen Dickenfunktion erhalten ist, mit einem Wert multiplizieren, welcher Zusammensetzungs- und Temperaturkompensation bewirkt.

8. Eine Meßvorrichtung nach einem der voranstehenden Ansprüche, dadurch gekennzeichnet, daß die Computermittel einen Mikrocomputer umfassen.

## Revendications

1. Calibre d'épaisseur pour mesurer l'épaisseur d'un matériau, comprenant une source de rayonnement (10), un détecteur (14) placé à une certaine distance de la source et disposé de manière à recevoir un faisceau de rayonnement (12) émis par la source (10), le détecteur (14) comprenant des moyens pour transformer l'intensité du rayonnement reçu par le détecteur en un signal de sortie électrique (I), un dispositif d'obturateur (22) en matériau absorbant le rayonnement, ce dispositif pouvant se déplacer sur commande pour venir couper le faisceau de rayonnement (12) entre la source (10) et le détecteur (14), le calibre définissant, entre la source et le détecteur, un premier chemin dans lequel on peut faire passer le matériau à mesurer, et un second chemin, parallèle au premier chemin, dans lequel on peut insérer des étalons (18) d'épaisseur nominale connue, ou l'obturateur (22), calibre d'épaisseur caractérisé en ce que l'intensité de la source de rayonnement, pour l'une au moins d'une plage d'épaisseurs du matériau, est parfaitement constante pendant l'étalonnage du calibre et pendant la mesure du matériau inséré dans le faisceau de rayonnement (12), l'épaisseur du matériau étant mesurée sous la forme d'une valeur absolue déterminée à partir d'une fonction reliant l'épaisseur absolue du matériau aux valeurs de sortie du détecteur et le calibre comportant des moyens pour enregistrer les valeurs respectives des signaux de sortie du détecteur correspondant aux étalons d'épaisseur nominale connue, des moyens d'ordinateur (16) étant utilisés pour déterminer une fonction d'épaisseur s'adaptant le mieux à la relation entre les valeurs enregistrées des épaisseurs étalon et les signaux de sortie correspondants du détecteur, et pour enregistrer cette fonction sous la forme de la relation entre l'épaisseur du matériau à mesurer et le signal de sortie du détecteur (14), les moyens d'ordinateur comprenant en outre des moyens pour déterminer une valeur de l'épaisseur du matériau à mesurer en appliquant la fonction d'épaisseur au signal de sortie du détecteur, lorsque le matériau à mesurer se trouve dans le faisceau, des moyens étant utilisés pour stocker sous la forme de valeurs d'erreur la différence entre les épaisseurs étalon nominales connues et les épaisseurs obtenues en appliquant la fonction d'épaisseur au signal de sortie de détecteur obtenu par insertion de l'étalon connu dans le faisceau de rayonnement, les moyens d'ordinateur comportant en outre des moyens pour corriger le signal de sortie du détecteur en calculant un rapport d'épaisseur sous la forme d'une fraction, dont le numérateur consiste en une épaisseur étalon nominale connue diminuée de l'erreur enregistrée de l'étalon, et dont le dénominateur est la valeur d'épaisseur obtenue par le mesure refaite de l'étalon en utilisant une fonction d'épaisseur préalablement stockée et en mettant à jour la fonction d'épaisseur par multiplication de la fonction préalablement stockée par le rapport d'épaisseur.

2. Calibre selon la revendication 1, caractérisé en ce que la combinaison des étalons comprend une valeur correspondant à un espace vide et une valeur représentant une épaisseur nulle.

3. Calibre selon la revendication 2, caractérisé en ce que les moyens d'ordinateur sont programmés pour déterminer la fonction d'épaisseur en utilisant un procédé statistique de meilleure adaptation dans lequel l'étalon représentant l'épaisseur nulle est compté plusieurs fois.

4. Calibre selon l'une quelconque des revendications 1 à 3, caractérisé en ce que la source de rayonnement est un isotope radioactif.

5. Calibre selon l'une quelconque des revendications 1 à 3, caractérisé en ce que la source de rayonnement est une source de rayons X.

6. Calibre selon la revendication 5, caractérisé en ce qu'on fait fonctionner la source de rayons X à l'une d'un certain nombre de tensions fixes, l'ordinateur étant programmé pour déterminer une fonction d'épaisseur correspondante pour chacune de ces tensions.

7. Calibre selon l'une quelconque des revendications 1 à 6, caractérisé en ce que des moyens sont utilisés pour multiplier la valeur d'épaisseur obtenue à partir de la fonction d'épaisseur courante, par une valeur qui effectue la composition et la compensation de température.

8. Calibre selon l'une quelconque des revendications précédentes, caractérisé en ce que les moyens d'ordinateur sont constitués par un microordinateur.

FIG. 1

FIG. 2

1

FIG 3